# EUROPEAN PATENT APPLICATION

(11) **EP 0 838 890 A2**
(43) Date of publication of application: **29.04.1998**
(21) Application number: 97202890.6
(22) Date of filing: 22.09.1997
(51) Int. Cl.: H02K 15/09

(54) **Armature winding apparatus**

(30) Priority: 24.09.1996 US 26957
(71) Applicant: ATS Automation Tooling Systems Inc., Cambridge, Ontario N2V 1X4 (CA)
(72) Inventor: Woerner, Klaus D., Cambridge, Ontario N1R 5S3 (CA); Shwery, Robert M., Waterloo, Ontario N2V 1X4 (CA)
(74) Representative: Gee, Steven William

(57) **Abstract**

The winding station (1) includes an armature lifting assembly (6) which extends upwardly through openings in a pallet (3) on a conveyor (2), to lift an unwound armature (99) on the pallet into alignment with an indexing collet (8) on one of preferably two or more loading/indexing assemblies (9), spaced radially apart and slidably mounted on a turret assembly (10) which is rotatably mounted on a base (13). The turret assembly rotates to carry an armature in the indexing collet to the winder (100) for winding. During the winding cycle, the next unwound armature may be loaded into the indexing collet of another loading/indexing assembly. After winding, the turret assembly rotates so that the wound armature can undergo additional processing or be returned to a pallet, and so that a new unwound armature can be presented to the winder. The indexing collet retains the armature throughout winding and indexes it rotationally as required for winding. The winder may support but does not itself grasp or index the armature.

## Description

### TECHNICAL FIELD

This invention relates to an armature winding station for the production of electric motors, and particularly to an armature winding station of the type using a winder in which the armature wire is wound into the longitudinal slots in the lamination stacks of an armature core by rotating fliers from which the wires extend, the armature being held in place for such winding and being indexed appropriately for successive windings.

In armature winding, it is known to provide a conveyor along which unwound armatures are passed, a winder adjacent the conveyor, and a turret assembly which takes an unwound armature from the conveyor, which rotates to carry it to the winder for winding, and which rotates back to the conveyor to place the wound armature on the conveyor.

However, in such known winding stations, the rotating turret has strictly served essentially a pick-and-place function, i.e. its role has been limited to transferring the unwound armature from the conveyor, and the wound armature back to the conveyor. The winder itself has gripped the armature shaft, and has provided the necessary indexing of the armature as the wire is wound into the slots.

### DISCLOSURE OF INVENTION

In the invention, it was recognized that it would be advantageous to employ a rotating turret which not only serves a pick-and-place function, but which also provides additional functionality, including indexing of the armature.

Thus in the preferred embodiment of the invention, the winding station includes an armature lifting assembly which extends upwardly through openings in an armature-carrying pallet on a conveyor, to lift an unwound armature on the pallet into alignment with a collet on one of preferably two or more identical and independently operable loading/indexing assemblies, or simply "indexers", spaced radially apart and slidably mounted on a turret assembly which is rotatably mounted on a base. The indexers independently slide along respective rails on the rotating portion of the turret assembly. After an indexer receives an unwound armature and winding of any previously-loaded armature is completed, the turret assembly rotates to carry the armature to the winder for winding. During the winding cycle, the next unwound armature may be loaded into another indexer. After winding, the turret assembly rotates so that the wound armature can undergo additional processing or be returned to a pallet, and so that a new unwound armature can be presented to the winder. The collet in each indexer is driven by a servo motor to provide the required indexing function, i.e. the armature is not passed to an indexing chuck or collet in the winder. Instead of a collet, the winder provides only a support sleeve into which the free end of the armature shaft is inserted. The support sleeve supports the free end of the armature shaft, but does not grip it and does not provide any indexing.

This arrangement provides a number of advantages, including faster cycle time and a less complicated winder head.

The principal advantages of the invention are achieved only if there are at least two indexers. However, the invention in its broadest sense could be considered to encompass the much less useful configuration of there being only one indexer. This would obviously mean greatly reduced efficiency, however, since it would not be possible to unload a wound armature and load an unwound one while another armature was being wound.

In its broadest sense, therefore, the invention provides a winding station for taking an unwound electric motor armature from a pickup location and winding wire onto the armature, including a winder displaced from the pickup location, a rotating turret assembly positioned between the pickup location and the winder, at least one loading/indexing assembly on the rotating turret assembly having an indexing collet for grasping the shaft of an armature removed from the pickup location, means for transferring an armature from the pickup location to the indexing collet, means for rotating the turret and positioning the grasped armature for winding at the winder, and computerized control means for controlling the winding station, with the indexing collet retaining the armature throughout winding and indexing the armature rotationally about its longitudinal axis as required for winding of wire onto it. The winder may support but does not itself grasp or index the armature.

Further features and advantages of the invention and the sequence of operation of the winding station, will be described or will become apparent in the course of the detailed description which follows.

### BRIEF DESCRIPTION OF DRAWINGS

The invention will now be described in detail, with reference to the accompanying drawings of the preferred embodiment by way of example only, in which:
Fig. 1 is a plan view of the winding station and conveyor;
Fig. 2 is a corresponding side elevation view;
Fig. 3 is a plan view showing a pallet arrested by a first stop, corresponding to one armature position;
Fig. 4 is a plan view showing a pallet arrested by a second stop, corresponding to a second armature position;
Fig. 5 is a side elevation view, showing an armature being lifted from a pallet;
Fig. 6 is a similar view to Fig. 5, showing the armature fully lifted;

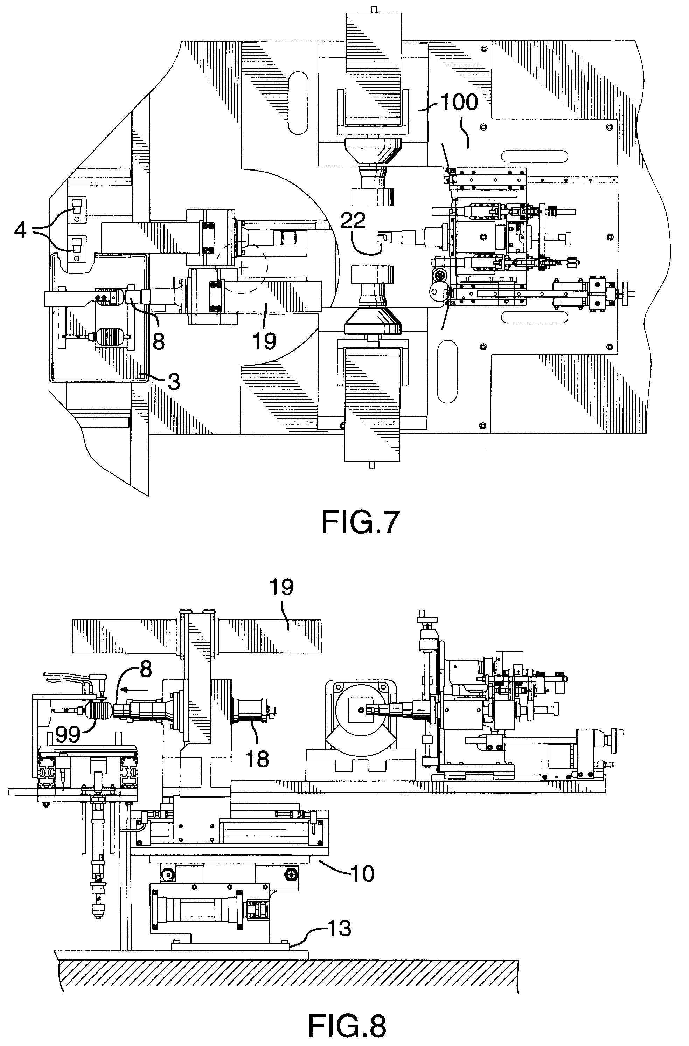

Fig. 7 is a plan view showing the collet of the indexer advanced to take the armature;
Fig. 8 is a corresponding side elevation view;
Fig. 9 is a cross-section of the indexer;

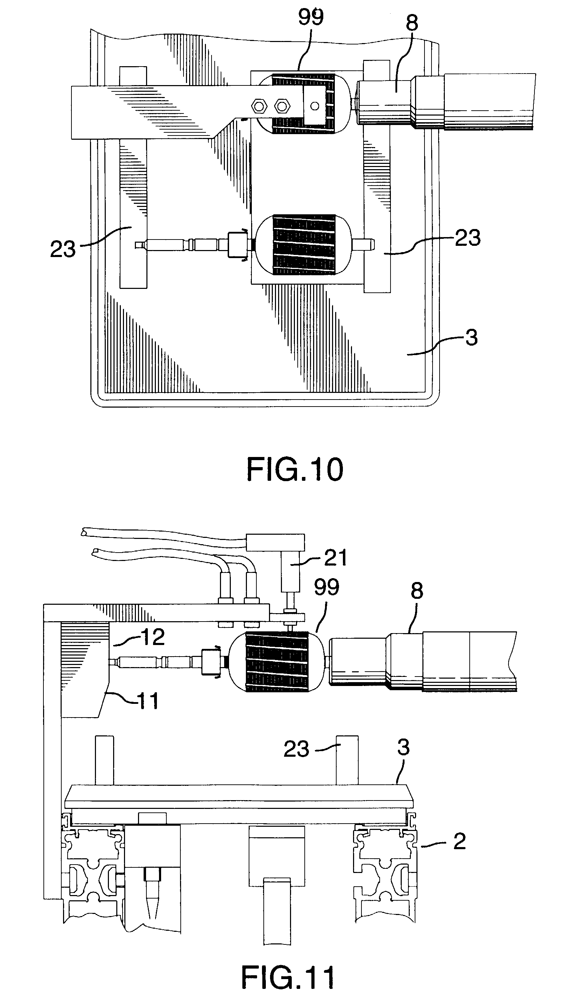

Fig. 10 is a plan view showing an armature engaged by the collet;
Fig. 11 is a corresponding side elevation view;

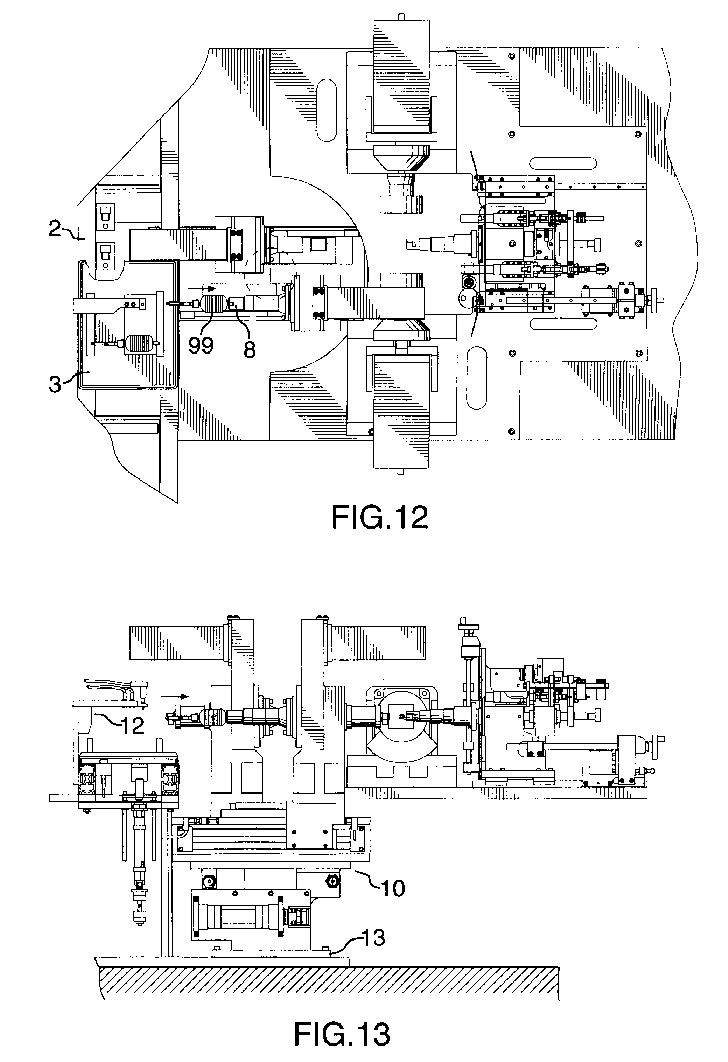

Fig. 12 is a plan view showing the indexer retracting the armature from the pallet/conveyor area;
Fig. 13 is a corresponding side elevation view;

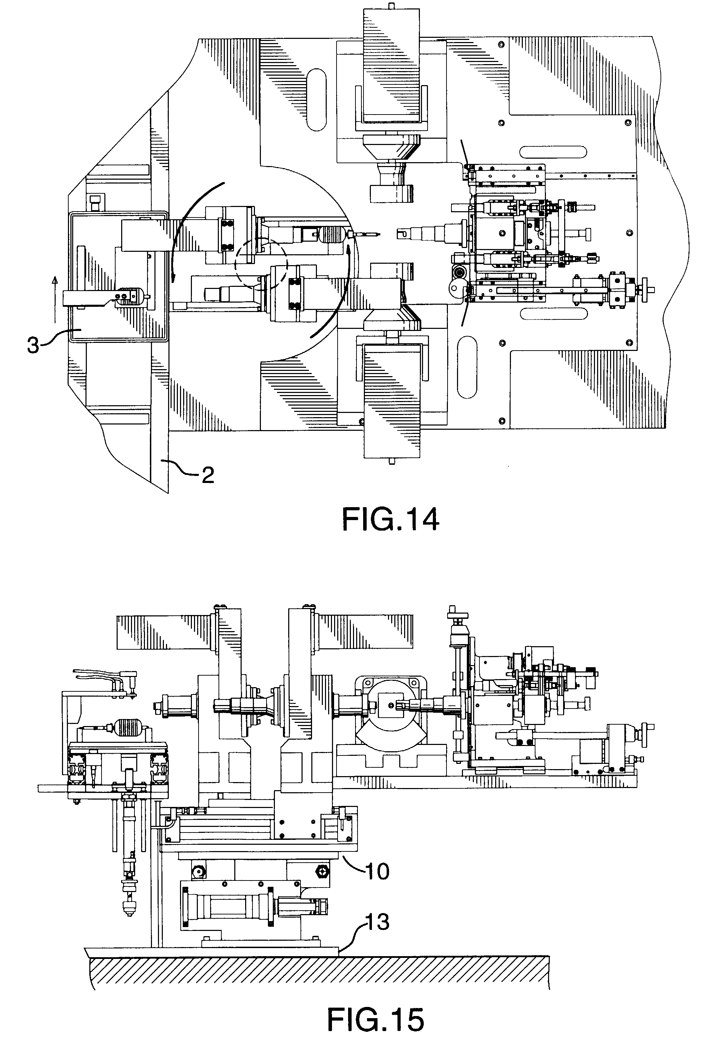

Fig. 14 is a view showing the armature being rotated by the turret assembly, over to the winder, in preparation for positioning at the winder;
Fig. 15 is a corresponding side elevation view;

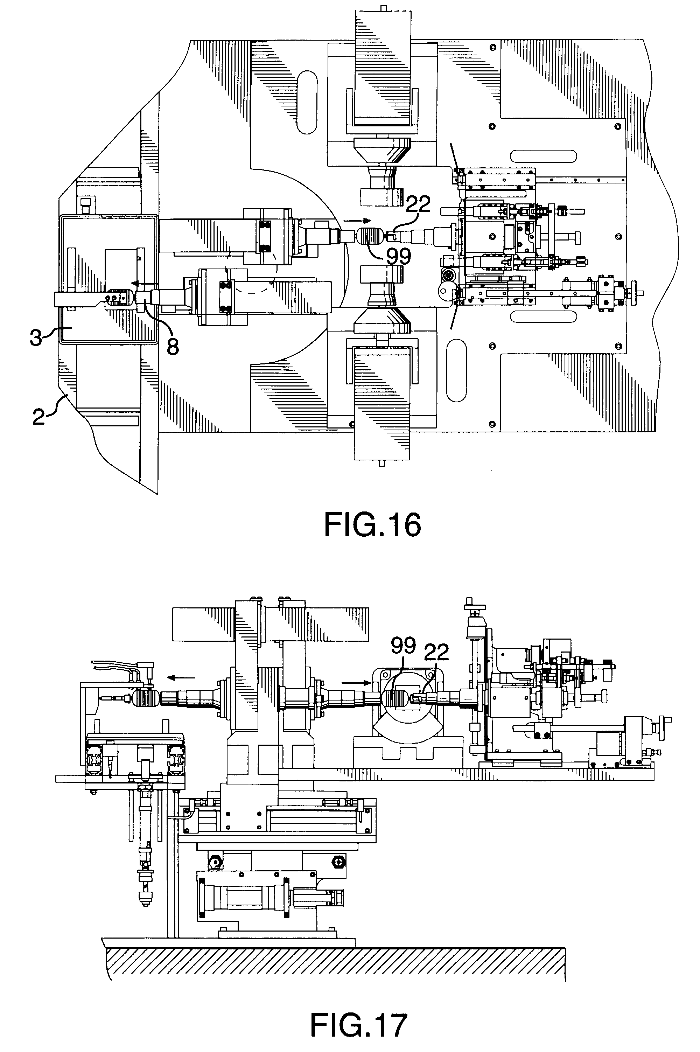

Fig. 16 is a view showing the armature being positioned at the winder, also showing the next armature being grasped by the collet of the other indexer;
Fig. 17 is a corresponding side elevation view;

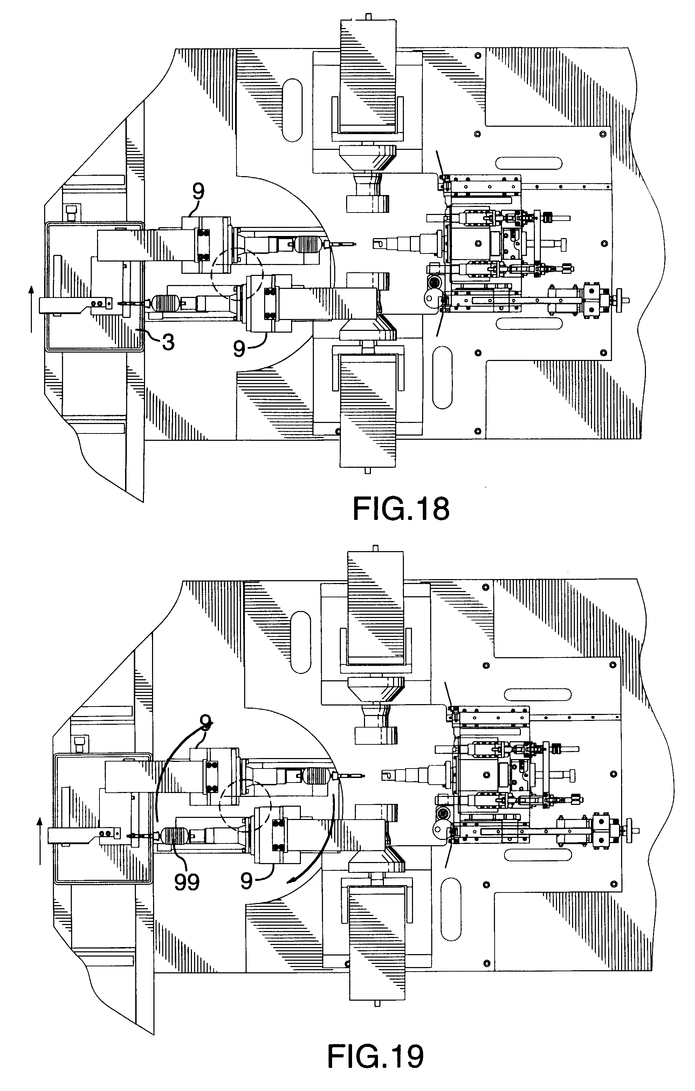

Fig. 18 is a plan view showing the wound armature and the armature to be wound both being retracted, prior to rotation of the turret assembly;
Fig. 19 is a plan view showing rotating of the turret assembly to return the wound armature to a pallet, and to take the next unwound armature to the winder;
Figs. 20 and 21 are cross-sections showing the rack and pinion arrangement used to rotate the turret assembly;
Fig. 22 is another side elevation view, in partial cross-section; and
Fig. 23 is a side elevation view at 90 degrees to Fig. 22.

### BEST MODE FOR CARRYING OUT THE INVENTION

The winding station **1** of the preferred embodiment is positioned alongside a conveyor **2** along which pallets **3** are conveyed. Each pallet carries one or more armatures **99**. Not necessarily every pallet on the main conveyor is destined for any one winding station, since there may be a number of winding stations positioned along the main conveyor. If more than one armature is on a pallet, typically though not necessarily each armature is routed to another winding station, at another location along the conveyor.

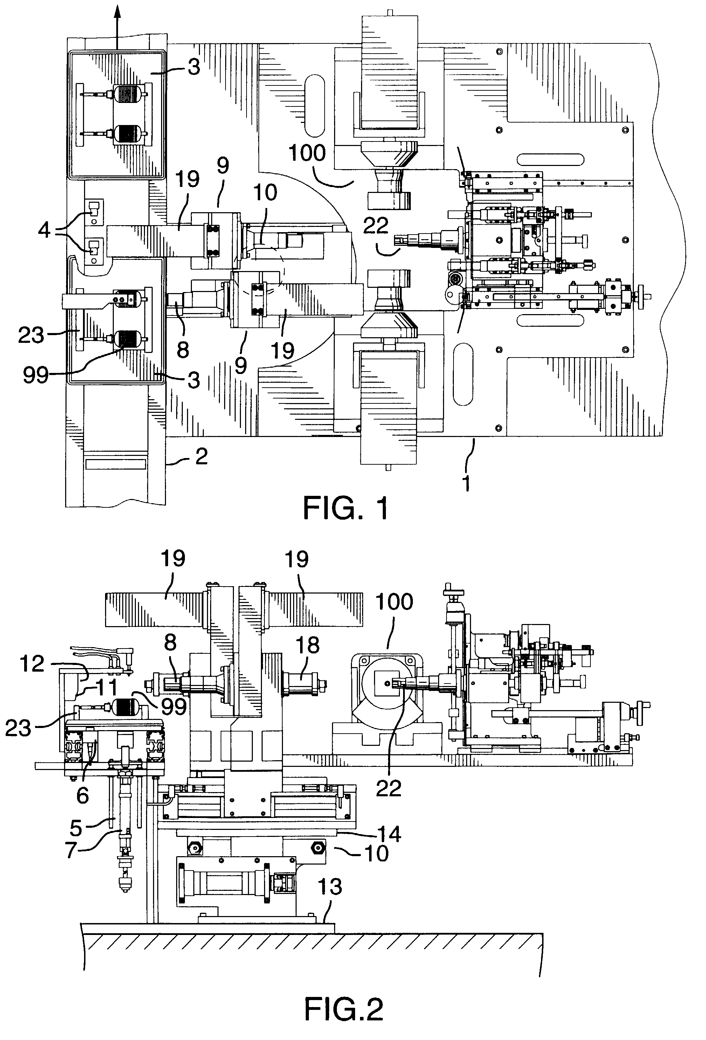

A pallet moving along the conveyor is caused to stop at the winding station by a rough stop **4** which is moveable between a retracted position below the pallet and a raised stopping position where it is contacted by a passing pallet. When in the stopping position, it stops the pallet with an armature thereon positioned above an armature lifting assembly **5**. If there are several armature-carrying fixtures on the pallet, then there are several stops, as can be seen in Fig. 1, one corresponding to each armature position. Precise positioning of the armature is not necessary at this stage.

The armature lifting assembly in the preferred embodiment includes a saddle-like armature lifter **6** and any conventional means for operating such a lifter, such as a pneumatic cylinder **7**.

The armature lifter extends upwardly through openings in the pallet, to lift the armature from the pallet into alignment with a collet **8** on one of two or more identical loading/indexing assemblies, or simply "indexers" **9**, slidably mounted on opposite sides of a rotating turret assembly **10**. In the preferred and illustrated embodiment, there are two such indexers, 180 degrees apart, but it should be readily understood that there could be more than two such indexers. There could be a much less efficient version with only one indexer, or there could be three or four such indexers, for example, spaced apart radially around the turret assembly. There could even be more, theoretically, although at a certain point the overall winding station clearly would become too cumbersome, and there would be no advantage in terms of overall efficiency. Having two indexers works well; one armature can be wound while a wound armature is being unloaded and another is being loaded. This description of the preferred embodiment will relate to the two-indexer version, which clearly can be readily modified in obvious fashion to produce a version with more such indexers. Having more than two such indexers would facilitate using the work station for other operations in addition to winding (electrical testing, for example).

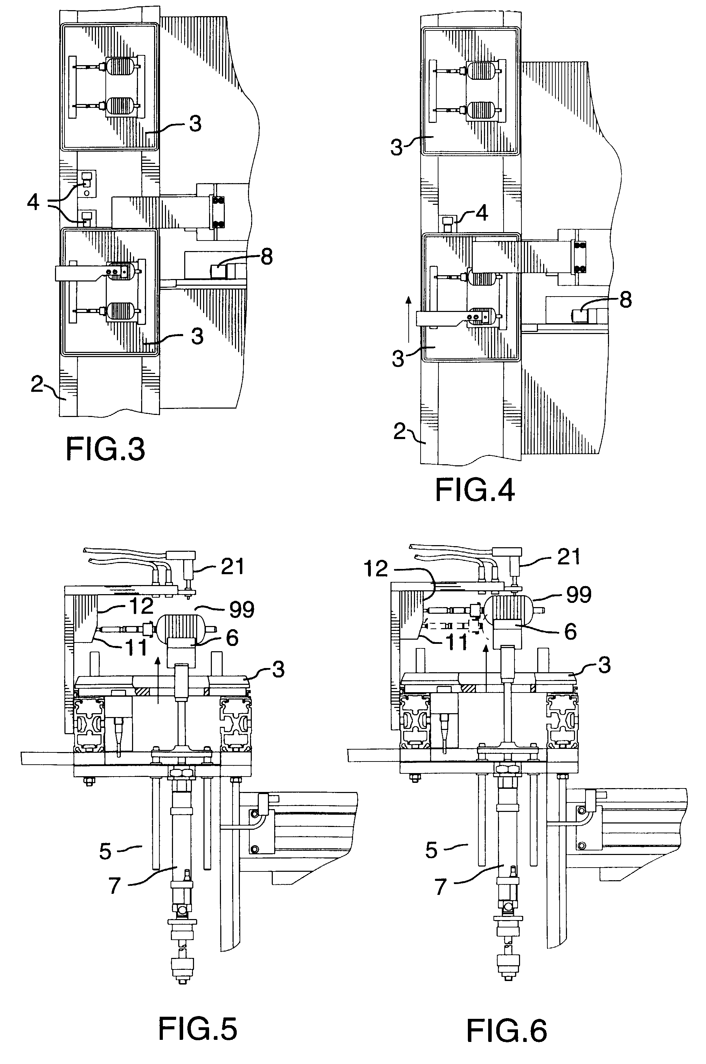

As seen in Figs. 5 and 6, as the armature is lifted, it is brought into contact with a block having a ramp portion **11** and a reference surface **12**. This provides the correct axial positioning once the collet **8** arrives to pick up the armature shaft, since a spring-loaded element within the collet, biased towards the reference surface, pushes the armature shaft against the reference surface before closing on the armature shaft. The correct lateral alignment is provided by virtue of the saddle shape of the lifter **6**, and the correct height is provided by a hard stop (not shown) on the lifter. Thus it is at this stage, just prior to the collet **8** clamping onto the armature shaft, that precise positioning of the armature is achieved.

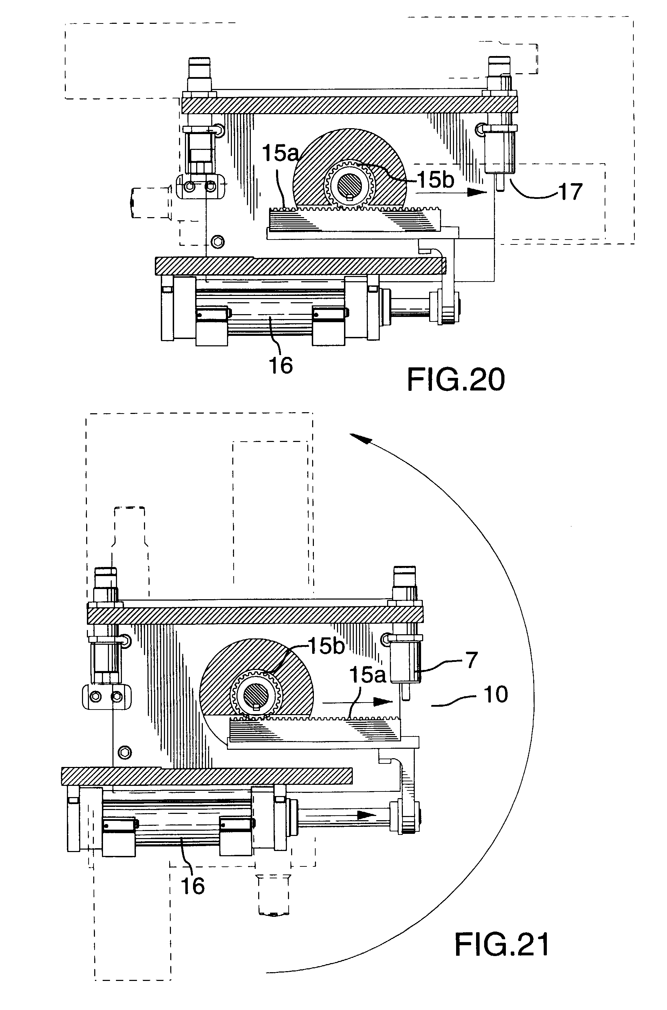

The turret assembly **10** is rotatably mounted on a base **13**. The rotation of the turret assembly is provided by any suitable programmable indexing means, such as a rack **15a** and pinion **15b** as shown in Figs. 20 and 21, operated via a cylinder **16.** The rotation is arrested by a shock absorber **17** which terminates at a hard stop (not shown) for precise positioning.

The two indexers **9** slide independently along respective rails **14**, which in the case of this two-indexer version are in parallel, symmetrically mounted relative to the turret assembly axis. An indexer receives an unwound armature, and the turret assembly rotates to carry the armature to the winder **17** for winding. After winding, the turret assembly rotates so that the wound armature can be returned to a pallet (the same pallet, or a different pallet, as desired). In the case where there are three or more indexers, the rotation results in the wound armature first moving to another station before being returned to a pallet by a subsequent rotation.

The indexers **9** each include an aforementioned collet **8** which closes on the armature shaft to hold the armature. The collet is operated by a linear actuator **18**, which drives wedge-shaped elements together in conventional fashion to clamp the armature shaft.

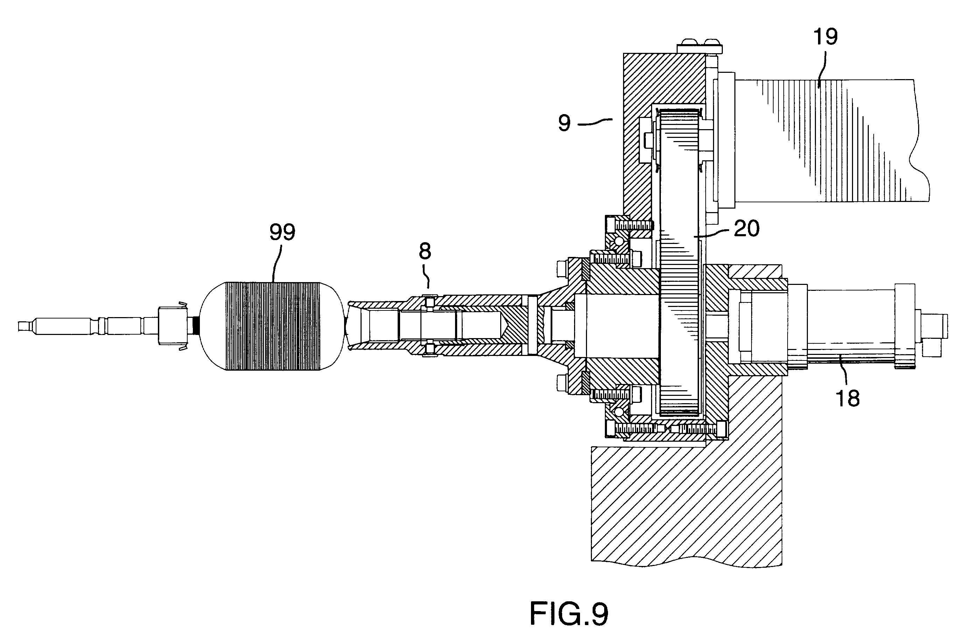

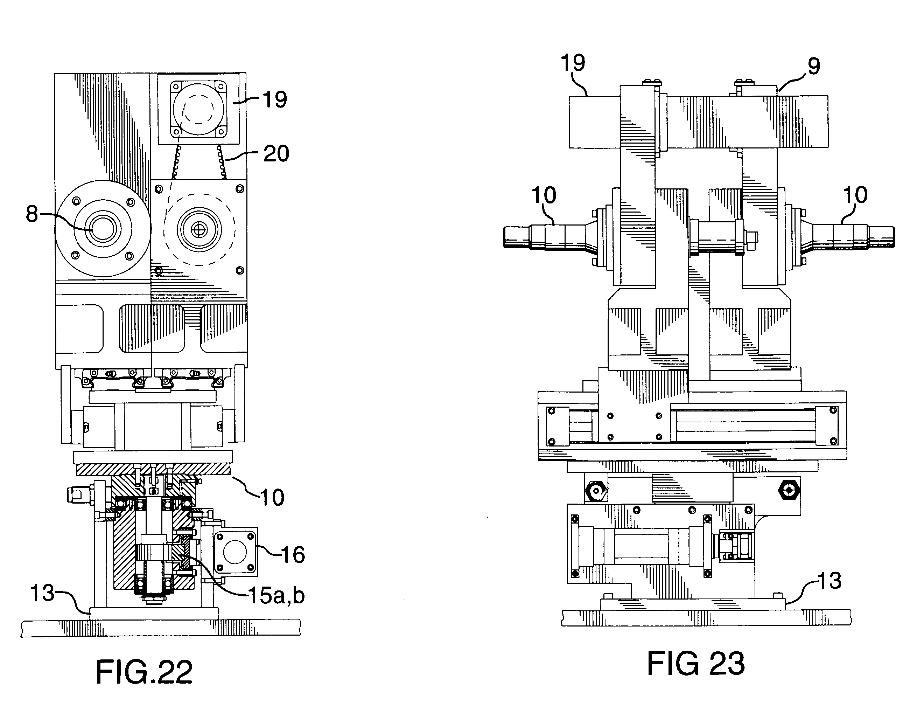

A servo motor **19** rotates the collet via a belt **20**, for indexing the armature rotationally about its longitudinal axis, i.e. its shaft, while it is being wound with wire. The servo motor seen best in Figs. 9, 22, and 23. As seen best in Fig. 6, a proximity switch **21** is positioned at the load/unload position to detect the location of the slot in the armature lamination stack, so that the system knows the angular position of the armature, so that it can be properly indexed to run the wire into the slots.

The winding station also includes the actual winder **100**, including conventional flyers (not illustrated) which wind the wire into the slots in the armature lamination stack. The winder is entirely conventional, except that it does not have a collet to grip and index the armature. There is thus no handoff between the turret assembly and the winder as in the prior art. Instead of a collet, the winder provides only a support sleeve **22** into which the free end of the armature shaft is inserted. The support sleeve supports the free end of the armature shaft, but does not grip it. Various shields are provided, as in the prior art, so that the wire is properly routed.

The operation of the winding station is controlled by any conventional computerized controls means, so as to provide the following sequence of operations:
1. A pallet **3** arrives at the station **1** before the sequence begins, and is arrested by a raised stop **4**.
2. The armature lifter **6** lifts the unwound armature from its nest **23** on the pallet **3**,
3. One of the indexers **9** advances along its rail **14** to the armature. The collet **8** on the indexer is open to receive the armature, and to prevent damage to its tooling while it is advancing. As it advances, a spring-loaded element pushes the armature shaft against the reference surface **12**.
4. Once the indexer is in the proper position the collet closes to grasp the armature.
5. The armature lifter **6** drops below the pallet **3**.
6. Once the armature lifter is fully lowered, the indexer proceeds with orienting the armature to the proper rotational orientation, via detection of a slot by the proximity switch **21**.
7. The indexer waits until a "Winder Complete" signal is received from the winder, indicating that winding of the previous armature has been completed.
8. The indexer fully retracts from the pallet and conveyor area.
9. While the above steps are happening with the loading indexer, the indexer at the winder rotates its servo motor on demand of the winder to index the armature as required for the flyers wind the wire onto the armature. The indexer at the winder also waits until the "Winder Complete" signal is received, and then it fully retracts from the winder.
10. The turret assembly then rotates 180 degrees. This positions the just-loaded armature at the winder, and the just-wound armature opposite the pallet.
11. The indexer carrying the new armature advances to the winder and the winding operation begins again.
12. The other indexer, carrying the wound armature, advances to the pallet.
13. The armature lifter lowers the completed armature to the pallet nest and the indexer then retracts to the mid position
14. The pallet then leaves the station.

It should be appreciated that the above description relates to the preferred embodiment by way of example only. Many obvious variations will be apparent to those who are knowledgeable in the field of the invention, and such obvious variations are within the scope of the invention.

For example, it should be understood that the invention should not be restricted to use with armatures which are necessarily delivered on pallets on a conveyor. The system clearly could be readily adapted for use with any other means of routing armatures past it. Any conventional alternative means could be used to take an armature as it goes past, regardless of the means by which it is conveyed, and then move it into position for grasping by the collet of the indexer.

It would also be possible, though not optimal, to provide a rotating turret assembly on which the indexers are fixed in location. In such an embodiment, the armature lifter or other armature handling means would have to incorporate the additional functionality of being able to deliver the armature directly into the indexer's collet, and the winder would have to be slidably mounted to move forward to a winding position once the turret rotated an armature into position for winding. This is not likely to be an efficient way of configuring a system, since loading of the armature into the collet would be more complicated, and since moving the mass of the whole winder would not be very desirable.

## Claims

1. A winding station (1 ) for taking an unwound electric motor armature (99) from a pickup location (3) and winding wire onto said armature, comprising a winder (100) displaced from said pickup location, a rotating turret assembly (10) positioned between said pickup location and said winder, at least one loading/indexing assembly (9) on said rotating turret assembly having a collet (8) for grasping the shaft of an armature removed from said pickup location, means (6) for transferring an armature from said pickup location to said collet, means (15a, 15b, 16) for rotating said turret assembly and positioning said grasped armature for winding at said winder, and computerized control means for controlling said winding station, characterized by said collet retaining said armature throughout winding at said winder and indexing said armature rotationally about its longitudinal axis as required for winding of wire onto said armature, where said winder may support but does not itself grasp or index said armature.

2. A winding station as recited in claim 1, where each said loading/indexing assembly (9) is slidably mounted on said turret assembly (10), for movement towards and away from said pickup location (3) when positioned opposite said pickup location by said turret assembly, and for movement towards and away from said winder (100) when positioned opposite said winder by said turret assembly.

3. A winding station as recited in claim 2, where said pickup location (3) is an armature carrying means on a conveyor (2), further comprising means (6, 11, 12) for removing said armature from said armature carrying means and for positioning said armature precisely for grasping by said collet.

4. A winding station as recited in claim 3, where said armature carrying means is a pallet (3) carried on said conveyor (2), and where said means for removing said armature from said armature carrying means, namely said pallet, is an armature lifting assembly (6) which lifts said armature upwardly from said pallet, said conveyor comprising means (4) for temporarily stopping said pallet in position for said lifting to occur.

5. A winding station as recited in claim 1, where there are at least two said loading/indexing assemblies (9) spaced apart radially on said turret assembly (10).

6. A winding station as recited in claim 5, where each said loading/indexing assembly (9) is slidably mounted on said turret assembly (10), for movement towards and away from said pickup location (3) when positioned opposite said pickup location by said turret assembly, and for movement towards and away from said winder (100) when positioned opposite said winder by said turret assembly.

7. A winding station as recited in claim 6, where said computerized control means is configured to operate said winding station in the following sequence of steps:
a. positioning an unwound armature (99) for loading into said collet (8);
b. advancing said loading/indexing assembly (9) towards said unwound armature and grasping said armature shaft in said collet;
c. orienting the armature to a proper rotational orientation for commencement of winding, in response to detection of a slot in laminations of said armature by detection means (21) adjacent said grasped armature;
d. retracting said loading/indexing assembly from said pickup location sufficiently to be clear of same;
e. upon receipt of a signal from said winder (100) indicating that no winding is in progress, retracting any wound armature from said winder and rotating said turret assembly to position said unwound armature opposite said winder and any wound armature at another location;
f. advancing said loading/indexing assembly into said winder to position said armature for winding; and
g. winding wire onto said armature and indexing said armature as required for said winding.

8. A winding station as recited in claim 7, where there are two said loading/indexing assemblies (9) spaced apart radially on said turret assembly, and where said other location in step e. is opposite said pickup location (3).

9. A winding station as recited in claim 8, where said armature carrying means is a pallet (3) carried on a conveyor (2), and where said means for removing said armature from said armature carrying means, namely said pallet, is an armature lifting assembly (6) which lifts said armature upwardly from said pallet, said conveyor comprising means (4) for temporarily stopping said pallet in position for said lifting to occur, and where said sequence of steps includes the step, after step e., of operating said armature lifting assembly to lower said wound armature onto said pallet for conveying away.

10. A winding station as recited in claim 1, where there are two said loading/indexing assemblies (9) spaced apart radially on said turret assembly (10).
